# EUROPEAN PATENT APPLICATION

(11) **EP 4 194 127 A1**
(43) Date of publication of application: **14.06.2023**
(21) Application number: 21213078.5
(22) Date of filing: 08.12.2021

(54) **METHOD FOR PRODUCING A DRILL TOOL CUTTING SECTION AND SUCH A DRILL TOOL CUTTING SECTION**

(71) Applicant: AB Sandvik Coromant, 811 81 Sandviken (SE)
(72) Inventor: ROYER, Raphael, 811 81 Sandviken (SE)
(74) Representative: Sandvik

(57) **Abstract**

Method for producing a drill tool cutting section (28) for cutting a workpiece (35) of metal and/or composite. The method comprises providing (1) a blank; applying (5) a first coating layer (18) of a first coating material to the blank (10), including the front face (17) and the envelope surface (12); removing (6) of material including the first coating layer (18) from the blank (10), comprising forming a drill point (20) in the front face (17) and forming a margin (24) in the envelope surface (12) by retaining at least a portion of the envelope surface (12) together with the thereto applied first coating layer (18); and applying (7) a second coating layer (25) of a second coating material to the blank (10), including the drill point (20) and the margin (24).

Drill tool cutting section produced by the method.

## Description

### Technical field

The present invention relates to a method for producing drill tool cutting section for metal cutting and such a drill tool cutting section.

### Background

A wide range of components are machined from many different types of material, such as metal, composites or combinations thereof. Accordingly, a variety of different cutting tools, and in particular drill tools, have been developed, which drill tools differ in design as well as in material. Conventionally, a drill tool comprises a drill point with cutting edges in front end. In order to stabilize the drill tool during operation, drill tools are often provided with axially rearwards extending margins, which bear and slide against a wall of the hole to be cut. In order to reduce wear, a coating is applied to the drill tool.

A problem with such known coated drills is that, for some applications, the coating wears off more quickly on the margin than on the drill point.

### Summary

It is an object of the present invention to mitigate the shortcomings of the prior art and to provide a drill cutting section with a coating that wears off more evenly and an efficient production method therefore. This object is achieved according to the invention by means of a method according to claim 1, a drill tool cutting section according to claim 8 and a drill tool according to claim 15.

According to a first aspect, the present invention relates to a method for producing a drill tool cutting section for cutting a workpiece of metal and/or composite, comprising providing a blank, which comprises a front end with a forwardly facing front face, a rear end, and an envelope surface, wherein the envelope surface extends from the front end to the rear end around a central longitudinal axis, and, in each axial plane of the blank, the envelope surface defines a maximal outer radius of the blank. The method further comprises, in the following order, applying a first coating layer of a first coating material to the blank, including the front face and the envelope surface; removing of material including the first coating layer from the blank, comprising forming a drill point in the front face and forming a margin in the envelope surface by retaining at least a portion of the envelope surface together with the thereto applied first coating layer; and applying a second coating layer of a second coating material to the blank, including the drill point and the margin.

According to a second aspect, the present invention relates to a drill tool cutting section for metal cutting, comprising a body, which comprises a front end with a drill point, a rear end, and an envelope surface, which extends from the front end to the rear end around a central longitudinal axis, wherein the envelope surfaces comprises a margin which, in each axial plane of the body, defines a maximal outer radius of the body. The margin has a first coating layer of a first coating material under a second coating layer of a second coating material, and the drill point has the second coating layer of the second coating material and lacks the first coating layer of the first coating material.

According to a third aspect, the present invention relates to a drill tool comprising such a drill tool cutting section.

It has been discovered, on one hand, that a thicker coating layer is beneficial at the margin in order to increase wear resistance. On the other hand, at the drill point, the coating layer is more prone to cracking and/or flaking with increasing thickness. Thanks to the subject method, it is possible to provide a margin with a first coating layer in addition to a second coating layer and at the same time provide a drill point that lacks the first coating layer. Therefore, the thickness and properties of the second coating layer can be selected to suit specific requirements at the drill point. Since the margin has both the first and the second coating layer, the first coating layer can be selected so that the first coating layer together with the second coating layer in combination provide sufficient coating thickness and properties for the margin. Thus, a drill tool cutting section and a drill tool comprising such a cutting section are achieved which have suitable protective coatings both at the margin and the drill point.

Thanks to that it is sufficient with the second coating layer of the second coating material at the drill point, an efficient production method is possible. According to the subject method, the first coating layer is be applied to at least a portion of the blank including the front face and an axial length of the envelope surface before processing the blank by removing material. Furthermore, a portion of the envelope surface with the first coating layer is dedicated as margin and no blank material with the first coating layer is removed therefrom. Instead, blank material with the first coating layer is removed from the front face, for example by a machining process such as grinding, so that the drill point is formed. Thereafter, the second coating layer is applied, whereby the margin receives the second coating layer on top of the first coating layer, and the drill point is coated with the second layer while lacking the first coating layer there under. Advantageously, the subject method allows for application of the first coating layer and the second coating layer to selected areas of the blank without time consuming masking and/or delicate removal of coating layer from surfaces that has to be left intact.

The subject method and apparatus relate to a drill tool cutting section, which drill tool cutting section for example constitutes a separate component, such as an exchangeable head, or is comprised in a drill tool, such as a tool of a type commonly known as solid round tools, for example twist drills.

According to an embodiment, the drill tool cutting section is comprised in an integral one-piece component of a homogenous material. For example, the homogenous material is cemented carbide or steel. According to another embodiment, a front portion of the blank for forming the drill point comprises cermet, ceramic, diamond or cBN, while a rear portion comprises cemented carbide or steel

The drill tool cutting section has a body, which preferably is elongated in the longitudinal direction of the central longitudinal axis in order to be operable for drilling elongated holes. Alternatively, the body is about as long, as it is wide (for example measured as two times a radius of the drill tool cutting section), or shorter.

In a first method step, a blank is provided. The blank, and preferably also a body of the therefrom produced drill tool cutting section, comprises a front end, a rear end and a central longitudinal axis extending from the front end to the rear end. An envelope surface extends longitudinally around the central longitudinal axis and defines, in each axial cross section, a maximal outer radius. The blank comprises a forwardly facing front face at the front end. The finished drill tool cutting section is rotatable around the central longitudinal axis. During use, the drill tool cutting section has a direction of rotation for cutting operations.

According to an embodiment, the blank is provided as a complete component with a basic geometrical shape, which component is ready for the next method step of applying a first coating layer. Preferably, the basic geometrical shape of the blank is a circular cylinder or a truncated cone that tapers slightly in the direction of the longitudinal axis.

According to another embodiment, the providing the blank includes to subject the blank to machining before the next method step of applying a first coating layer.

Machining is to be understood as a subtractive, material removing operation, for example a chip removing operation such as milling, turning or drilling, or for example grinding.

According to an embodiment, the blank is produced from an elongated rod, including cutting the rod to pieces of suitable length. The cut pieces are treated, for example by machining an envelope surface of each piece, to obtain a desired maximal outer radius. Preferably, the cut pieces are ground for forming an envelope surface which, in each axial plane, has a respective maximal outer radius. The envelope surface of a piece corresponds to an envelope surface of the provided blank. Optionally, the maximal outer radius of the envelope surface of the finished blank, and the therefrom produced drill tool cutting section, is constant, increases or decreases in an axial direction rearward from the front end. Preferably, the maximal radius decreases rearward from a front end.

In a subsequent method step, a first coating layer of a first coating material is applied to the blank. Thus, the blank is coated with a first coating material.

Thereafter, material including the first coating layer thereon is removed from selected portions of the blank, which selected portions include at least the front face and portions of the envelope surface. Thereby, a drill point is provided at the front end of the blank and a margin.

Finally, in a subsequent method step, a second coating layer of a second coating material is applied to the blank. Thus, the selected portions of the blank have the second coating layer of the second coating material and lack the first coating layer. Other portions have both coating layers.

According to an embodiment, material is removed from the envelope surface creating a land and leaving a margin in form of a ridge, which ridge protrudes radially from the land and extends axially rearwards from the drill point. At a radially outer surface at the maximal outer radius, the ridge/margin has the first coating layer intact. Preferably, as seen in a cross section, the outer surface of the margin is convex, and more preferably follows a circular arc with the central longitudinal axis as center.

According to an embodiment, the envelope surface is machined, for example by milling or grinding and preferably by grinding, to form the land which is set back relative the margin. Thereby the drill tool cutting section is provided with body clearance rotationally behind the protruding margin. A body clearance of the land advantageously ensures that the drill tool cutting section is supported against the cut hole wall by the margin only, which reduces friction and maintains centering properties. In order to simplify production, preferably the set back land is coated with the second coating layer, and lacks the first coating layer, even though no or substantially no contact occurs at the set back land.

According to an embodiment, the removing of material from the blank further comprises forming, for example by machining such as grinding, a chip flute in the envelope surface. Optionally, the chip flute extends in parallel with the central longitudinal axis, is inclined to the central longitudinal axis or follows a helix around the central longitudinal axis. A land formed between two consecutive chip flutes may lack a protruding ridge and instead constitute by itself the margin. Optionally, the method step of applying the second coating layer comprises the applying of the second coating layer to the blank further including the chip flute.

According to an embodiment, the drill point comprises one or several cutting edges, for example two cutting edges. Preferably, each cutting edge is formed at an intersection of a clearance surface and a rake surface. Each cutting edge extends radially outwards from or close to the central longitudinal axis. Optionally, there is a central chisel edge at the central longitudinal axis.

According to an embodiment, the clearance surface is a forwardly facing surface that has been machined into to the front face of the blank. In the embodiment, the rake surface is a front portion of a surface of the chip flute. Preferably there is one chip flute associated with each cutting edge.

According to an embodiment, the subject drill tool cutting section comprises the drill point and a rearward extending section having chip flutes. The embodiment has several cutting edges, preferably two cutting edges, and a respective one of the chip flutes associated with each cutting edge. The drill tool cutting section comprises a respective one of the lands between each two of the chip flutes. As seen in the direction of rotation for cutting operations, each land comprises a rotationally leading edge bordering a rotationally leading chip flute and a rotationally trailing edge bordering a rotationally trailing chip flute. One respective margin is formed at the rotationally leading edge of each of the lands. The subject drill tool cutting section thus comprises one or several margins, and preferably, an equal number of margins and cutting edges. Preferably, the cutting edges and margins are configured and designed equally. The embodiment of the subject drill tool cutting section may have a rotational symmetry.

A first coating layer and a second coating layer are applied to the blank in order to form the cutting section as described herein. Preferably, both coating layers consist of a respective homogenous coating material. One or both coating layers may be in form of a multi-layer. The applying of the first coating layer and the second coating layer may be performed in any suitable way, such as for example a PVD process.

At the margin of the drill tool cutting section, the first coating layer is located under the second coating layer. Thus, as seen in a radial direction from the central longitudinal axis toward the outer surface of the margin, the second coating layer follows after the first coating layer. Optionally, the drill tool cutting section comprises further coating layers. For example, the drill tool cutting section may comprise, at the margin, one or several additional coating layers under, between or above the first coating layer and the second coating layer.

According to an embodiment, both the first coating material and the second coating material is the same material. Optionally, the coating material is selected from a group consisting of nitrides or carbonitrides of one or more metal elements of group 4 - 6 in the periodic table of elements, aluminum and silicon.

This is advantageous for example with respect to simple production, adherence of the first coating layer to the second coating layer and predictable behavior of the two layers at the margin.

According to another embodiment, the first coating material and the second coating material differ. Preferably, in the method and in the drill tool cutting section, the first coating layer and the second coating layer are such selected and applied that one is more resistant to a certain type of wear than the other one. For example, the second coating layer is more resistant to wear caused by high pressure sliding than the first coating layer, or, the first coating layer is more resistant to wear caused by high speed sliding than the second coating layer.

It has been found that, for some applications, it is beneficial to have coating of different coating materials at the drill point and at the margin. At the drill point, wear is caused mainly by the cutting interaction of the cutting edges with the workpiece, why surfaces in the drill point are subjected to high pressure. At the margin, wear is caused mainly by sliding against a wall of the hole that is being cut in the workpiece, wherein pressure is low. Thanks to that the drill tool cutting section according to the embodiment comprises a margin that has a first coating layer of a first coating material below a second coating layer of a second coating material, the first coating layer is exposed should the second coating layer wear off. Furthermore, the drill point lacks the first coating layer, such that it can be ensured that the coating layer at the drill point does not become too thick and prone to cracking/flaking during operation.

For example, the applying of the first coating layer and the applying of the second coating layer may comprise selecting the first coating material and the second coating material such that the first coating layer and the second coating layer, when subjected to a respective, different high pressure sliding with all other conditions equal, have the same wear rate when the second coating layer is subjected to a higher pressure sliding than the first coating layer.

For example, the applying of the first coating layer and the applying of the second coating layer may comprises selecting the first coating material and the second coating material such that the first coating layer and the second coating layer, when subjected to a respective, different high speed sliding with all other conditions equal, have the same wear rate when the first coating layer is subjected to a higher speed sliding than the second coating layer.

Preferably, the conditions are compared when the drill tool cutting section is operated according to the intended use thereof, for example drilling holes in a workpiece of the intended material.

According to an embodiment, the applying of the first coating layer comprises selecting the first coating material from a group consisting of diamond materials and diamond like materials. Such materials advantageously have a high hardness and provide good wear resistance against high speed sliding at low pressure, which make them especially suitable for conditions at the margin. Alternatively, as already discussed, the first coating material may be selected from a group consisting of nitrides or carbonitrides of one or more metal elements of group 4 - 6 in the periodic table of elements, aluminum and silicon.

According to an embodiment, the applying of the second coating layer comprises selecting the second coating material from a group consisting of nitrides or carbonitrides of one or more metal elements of group 4 - 6 in the periodic table of elements, aluminum and silicon. Such materials advantageously provide good wear resistance against high pressure sliding and are not prone to cracking and/or flaking, which make them especially suitable for conditions at the drill point.

According to an embodiment, the first coating layer and the second coating layer comprise different types of metal nitrides.

Preferably, the applying of the first coating layer comprises applying the first coating layer with an average thickness at the margin of at least 1µm and at most 6µm. A thinner layer may not provide sufficient wear resistance. A thicker layer may be prone to flaking.

Preferably, the applying of the second coating layer comprises applying the second coating layer with an average thickness at drill point and the margin of at least 1µm and at most 6µm. A thinner layer may not provide sufficient wear resistance. A thicker layer may be prone to flaking.

The thickness of the first and second coating layers is to be measured normal to the surface they are applied to. The average value is an average of measurements at positions distributed over the surface such as to be representative of the entire surface.

Optionally, the drill tool cutting section is provided with the first coating layer on more surfaces than the margin. Optionally, the drill tool cutting section is provided with the second coating layer on more surfaces than the margin and the drill point, for example the chip flutes. The average thickness of the respective coating layer may deviate from the ranges that are preferred at the margin and at the drill point on other surfaces of the drill tool cutting section.

According to an embodiment, the drill tool cutting section is comprised in a drill tool. The drill tool is suitable for subtractive manufacturing of components in form of machining, specifically for drilling holes in a metal workpiece. Preferably, the drill tool constitutes a twist drill.

Preferably, the drill tool comprises a shaft section (alternatively termed a shank section) which extends axially rearward from a rear end of the drill tool cutting section to the rear end. Optionally, the shaft section may be formed integrally or non-integrally with the drill tool cutting section. When the shaft section is formed non-integrally with the drill tool cutting section, the drill tool cutting section may comprise at least one mounting interface for connecting the drill tool cutting section to a separate shaft or adapter.

Optionally, the shaft section lacks one of or both the first and the second coating layer. Since no or only minor wear occurs at the shaft section, advantageously coating need not be applied to the shaft section. Therefore, the choice of if any of the first and the second coating layers are applied can be determined depending on what is more suitable for the coating method used. For example, in some coating methods the blank is carried by being held by the shaft section such that the shaft section is shielded. Then the shaft section lacks both the first and the second coating layer.

The subject drill tool comprising the subject drill tool cutting section is especially advantageous for use in stainless steel drilling or cast iron drilling. It has been found that the margin is subjected to high abrasive wear in such applications.

### Brief description of the drawings

In the following, example embodiments will be described in greater detail and with reference to the accompanying drawings, in which:
Fig. 1 is an illustrated flow chart of an embodiment of the method for producing a drill tool cutting section according to the invention, wherein the embodiment further comprises producing a drill cutting tool which includes the produced drill tool cutting section;
Fig. 2 is a side view of an embodiment of a drill tool cutting section according to the invention, wherein the drill tool cutting section is comprised in a drill tool;
Fig. 3 is an enlarged perspective view from above of a front end portion of the embodiment of the drill tool cutting section is shown in Fig. 2, wherein enlarged cross sections along lines IIIa - IIIa and lines IIIb - IIIb are shown;
Fig. 4 is a perspective view of a front end portion of the drill tool shown in Fig. 2 when the drill tool is operated to drill a hole in workpiece.

All the figures are schematic, not necessarily to scale, and generally only show parts which are necessary in order to elucidate the respective embodiments, whereas other parts may be omitted or merely suggested. Unless otherwise indicated, like reference numerals refer to like parts in different figures.

### Detailed description

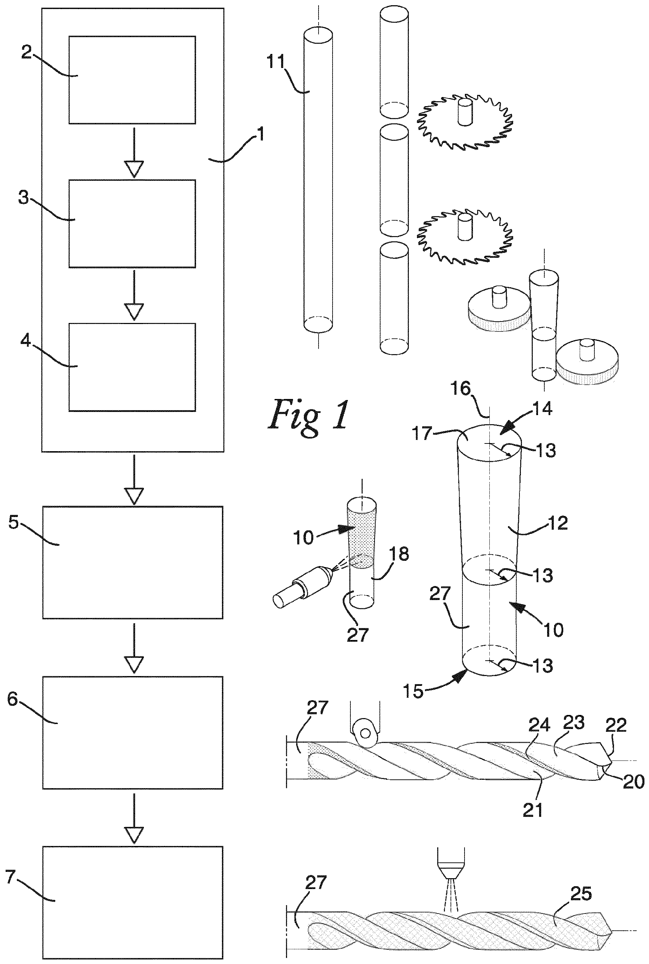

With reference to Fig. 1, an embodiment of the subject method a method for producing a drill tool cutting section for a drill tool is described. The drill tool is suitable for cutting a workpiece of metal and has a diameter of 10mm.

In a first step 1, a blank 10 is provided from an elongated, cylindrical rod 11, which rod 11 is provided in step 2. The rod 11 is comprised of a homogenous material in form of cemented carbide or steel. In step 3, the rod is cut to suitable lengths, which is in the example method is done by a parting-off tool. In step 4, the cut pieces are ground to form the blank 10 with an envelope surface 12 at a desired maximal outer radius 13. The envelope surface 12 extends from a front end 14 to a rear end 15 around a central longitudinal axis 16. The finished blank 10 is ground such that the envelope surface 12 tapers, wherein the maximal outer radius 13 in the front end 14 is larger than the maximal outer radius 13 in the rear end 15.

Thereafter, in step 5, the blank is coated with a first coating material in form of diamond like carbon (DLC). In the example embodiment, a first coating layer 18 is applied to the blank 10 including a front face 17 at the front end 14 and the envelope surface 12. However, the first coating layer 18 is not applied to a rear section 27 of the blank 10. The first coating material is applied using a PVD coating method. The coating forms the first coating layer 18 that has an average thickness 19 of 1,5 µm over the entire blank 10 including the envelope surface 12.

Thereafter, in step 6, material including the thereon applied first coating layer 18 is removed from the blank 10. The step 6 comprises removing material from the front end 14 to form a drill point 20 including two cutting edges 22, and to remove material from the envelope surface to form two chip flutes 21, wherein each chip flute 21 is associated with one respective cutting edge 22. Furthermore, the step 6 comprises removing material from the envelope surface in between the chip flutes 21 to form set back portions in form of two lands 23. At least a portion of the envelope surface in between the chip flutes 21 is retained with the first coating layer 18 intact. The retained portion forms a margin 24, which extends axially along and protrudes from the land 23. The step 6 of removing of material comprises machining by using grinding tools.

In the example embodiment, in addition to the margin, material is also retained at a rear section 27 of the blank 10. The rear section 27 is cylindrical, wherein the envelope surface 12 in the rear section 27 has a constant maximal outer radius 13. In the example embodiment, there is no coating on the rear section 27.

Finally, in step 7, the coated and machined blank 10 is provided with a second coating layer 25 of a second coating material in form of TiAIN, e.g. Ti40A160N. In the example embodiment, the second coating layer is applied to the blank 10 including the drill point 20 and the margin 24. However, the second coating layer 25 is not applied to the rear section 27. The second coating material is applied using a PVD method. The second coating layer 25 has an average thickness 26 of 3µm over the drill point 20 and the margin 24. Due to the shape of the chip flutes, the second coating layer 25 on the surfaces of the chip flute have a diverging thickness 26. Therefore, the average thickness 26 of the second coating layer 25 is established by investigating the surfaces of the drill point 20 and the margin 24 only.

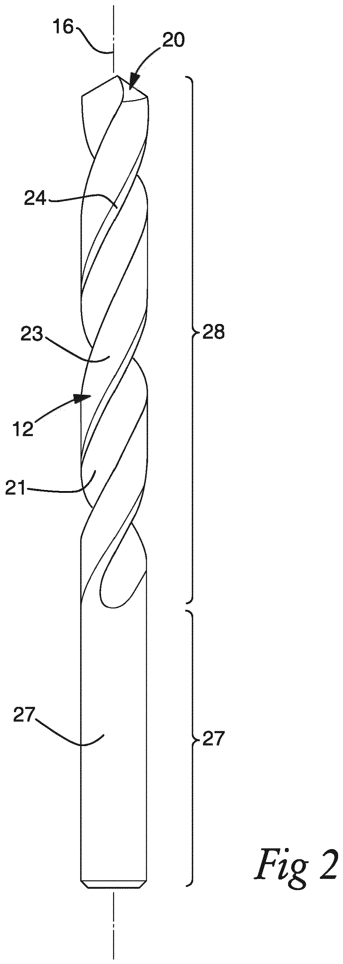

With reference to Figs. 2 - 4, a drill tool cutting section according to an embodiment of the present invention is described, wherein the drill tool cutting section is comprised in a drill tool. The drill tool cutting section has been produced by the above described example embodiment of the method for producing a drill tool cutting section and a drill tool comprising such a drill tool cutting section.

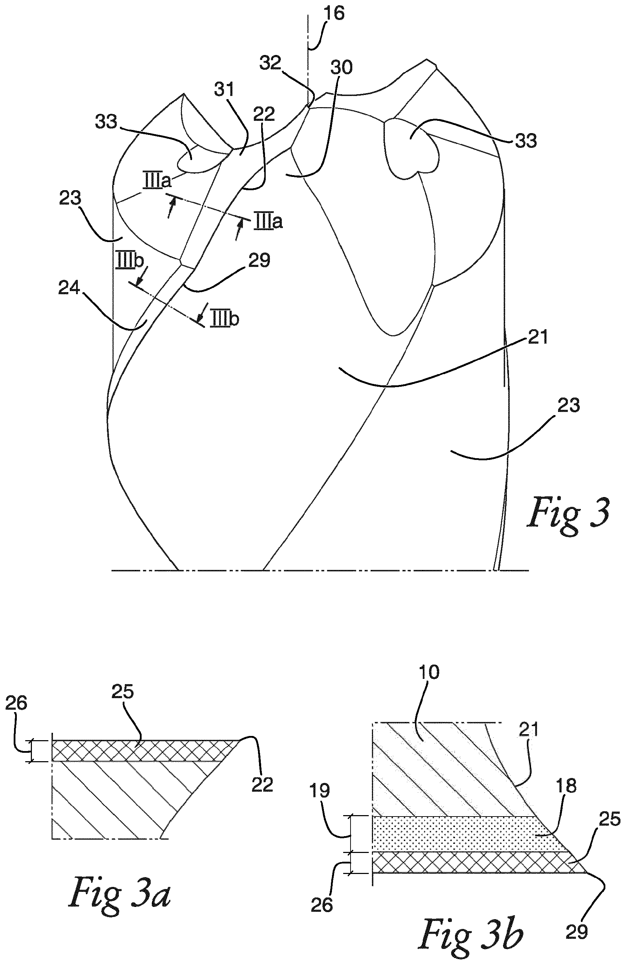

With reference to Figs. 2 and 3, the drill tool comprising the drill tool cutting section is described. The drill tool according to this example embodiment consists of two sections, i.e. a front section in form of the drill tool cutting section 28 and a rear section 27, which constitutes a shaft section. The cutting section 28 and the shaft section 27 are an integral one-piece component of cemented carbide.

A body of the drill tool cutting section 28 has a drill point 20 at the front end, which comprises two cutting edges 22. The body of the drill tool cutting section 28 further comprises an envelope surface 12, which extends axially rearward from a rear end of the drill point 20 around the central axis of rotation 16. The envelope surface 12 is provided with two chip flutes 21, which extend helically and axially rearward in the body from one cutting edge 22 each to a rear end of the drill tool cutting section. The helix angle of the chip flutes is 30°.

Each cutting edge 22 is formed at an intersection of a rake surface 30 formed by an upper portion of a surface in the chip flute 21, and a clearance surface 31, which is a forwardly facing front surface at the front end. The two cutting edges 22 meet at the central longitudinal axis 16 in a chisel edge 32. The drill tool cutting section comprises two coolant channels that have one exit opening 33 each in one respective clearance surface 31. Each clearance 31 comprises several part surfaces.

Between the two chip flutes 21, the envelope surface 12 is provided with lands 21 and margins 24. Each margin 24 forms a ridge, which protrudes radially from the land 23 and follows helically and axially rearward a respective one of the chip flutes 21. Each margin 24 is located on a rotationally leading edge 29 of a respective one of the lands 23, which leading edge 29 also is a rotationally trailing edge of a respective one of the chip flutes 21. In each cross section, the land 23 is located on a smaller maximal outer radius than the margin, so that the land 21 provides the body of the drill tool cutting section 28 with body clearance behind the margin 24. In each cross section, the drill tool cutting section has a maximal outer radius 13 at the land 24, wherein the maximal outer radius decreases axially radially rearward.

A body of the shaft section 27 is cylindrical and has a constant maximal outer radius 13. The shaft section 27 extends from the rear end of the drill tool cutting section to a rear end 15 of the drill tool.

In Fig. 3, two further enlarged cross section can be seen. A first cross section is a cross section perpendicular to one of the cutting edges 22. As can be seen, the clearance surface 31 comprises a single coating layer in form of the second coating layer 25 of Ti33Al67N. The second coating layer 25 has an average thickness 26 of 3µm as measured normal to the clearances surfaces 31 in positions spaced across the clearances surfaces 31.

A second cross section of Fig. 3 is an axial cross section at the margin 24. As can be seen, in a direction radially outward, the margin 24 comprises two coating layers, i.e. a first coating layer 18 of DLC. The first coating layer 18 that has an average thickness 19 of 1,5 µm as measured normal to the surface of the margin 24 in positions across the margin 24. The first coating layer 18 is located under a second coating layer 25 of Ti40Al60N. The second coating layer 25 has an average thickness 26 of 3 µm across the margin 24.

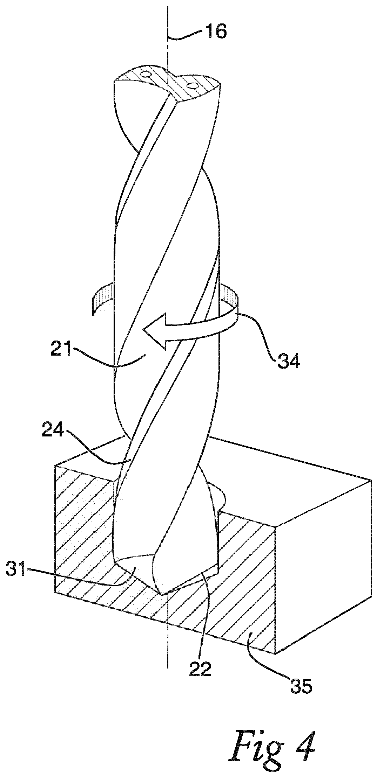

With reference to Fig. 4, an example of how the embodiment of the drill tool comprising the drill tool cutting section 28 which have been produced by the embodiment of the method, which have been described above may be operated is described. The drill tool is connected to a machine spindle and rotated in a direction of rotation 34. At the same time, the drill tool is advanced in the direction of the central longitudinal axis 16 toward a workpiece 35 of stainless steel. The cutting edges 22 engage with the workpiece 35 and cut a hole in the workpiece 35. As the drill tool advances into the workpiece 35, the second coating layer 25 of 3 µm Ti40Al60N is suitable for protecting the clearance surfaces 31 from wear caused by the arising high pressure and high temperature.

During operation, the drill is stabilized and held central in the hole by the margins 24 sliding against the hole wall. Due to friction, the second coating layer 25 will eventually wear off and expose the first coating layer 18. The first coating layer of 1,5 µm DLC is suitable to protect the margin from the arising high speed friction.

## Claims

1. A method for producing a drill tool cutting section (28) for cutting a workpiece (35) of metal and/or composite, comprising
- providing (1) a blank, which comprises
- a front end (14) with a forwardly facing front face (17),
- a rear end (15), and
- an envelope surface (12), wherein the envelope surface (12) extends from the front end (14) to the rear end (15) around a central longitudinal axis (16), and, in each axial plane of the blank (10), the envelope surface (15) defines a maximal outer radius (13) of the blank (10),
**characterized in** further comprising, in the following order,
- applying (5) a first coating layer (18) of a first coating material to the blank (10), including the front face (17) and the envelope surface (12),
- removing (6) of material including the first coating layer (18) from the blank (10), comprising forming a drill point (20) in the front face (17) and forming a margin (24) in the envelope surface (12) by retaining at least a portion of the envelope surface (12) together with the thereto applied first coating layer (18),
- applying (7) a second coating layer (25) of a second coating material to the blank (10), including the drill point (20) and the margin (24).

2. The method for producing a drill tool cutting section (28) as claimed in claim 1, wherein the applying (5) a second coating layer (25) of a second coating material comprises selecting the second coating material that is different from the first coating material.

3. The method for producing a drill tool cutting section (28) as claimed in any preceding claim, wherein the applying (5) of the first coating layer (18) comprises applying the first coating layer with an average thickness (19) at the margin of at least 1 µm and at most 6 µm.

4. The method for producing a drill tool cutting section (28) as claimed in any preceding claim, wherein the applying (7) of the second coating layer (25) comprises applying the second coating layer with an average thickness (26) at drill point (20) and the margin (24) of at least 1 µm and at most 6 µm.

5. The method for producing a drill tool cutting section (28) as claimed in any preceding claim, wherein the applying (5) of the first coating layer (18) comprises selecting the first coating material from a group consisting of diamond materials and diamond like materials, or from a group consisting of nitrides or carbonitrides of one or more metal elements of group 4 - 6 in the periodic table of elements, aluminum and silicon.

6. The method for producing a drill tool cutting section (28) as claimed in any preceding claim, wherein the applying (7) of the second coating layer (25) comprises selecting the second coating material from a group consisting of nitrides or carbonitrides of one or more metal elements of group 4 - 6 in the periodic table of elements, aluminum and silicon.

7. The method for producing a drill tool cutting section (28) as claimed in any preceding claim, wherein,
- the removing (6) of material from the blank (10) further comprises forming a land (23) with body clearance in the envelope surface (12), and
- the applying (7) of the second coating layer (25) comprises the applying of the second coating layer (25) to the blank further including the land with body clearance.

8. A drill tool cutting section (28) for metal cutting, comprising a body, which comprises
- a front end (14) with a drill point (20),
- a rear end (15), and
- an envelope surface (12), which extends from the front end (14) to the rear end (15) around a central longitudinal axis (16), wherein the envelope surfaces (12) comprises a margin (24) which, in each axial plane of the body, defines a maximal outer radius (13) of the body,
**characterized in**
- the margin (24) has a first coating layer (18) of a first coating material under a second coating layer (15) of a second coating material, and
- the drill point (20) has the second coating layer (25) of the second coating material and lacks the first coating layer (18) of the first coating material.

9. The method for producing a drill tool cutting section (28) as claimed in claim 8, wherein the second coating material is different from the first coating material.

10. The drill tool cutting section (28) as claimed in claim 8 or 9, wherein the first coating layer (18) has an average thickness (19) at the margin of at least 1 µm and at most 6 µm.

11. The drill tool cutting section (28) as claimed in any claim 8 - 10, wherein the second coating layer (25) has an average thickness (26) at drill point (20) and the margin (24) of at least 1 µm and at most 6 µm.

12. The drill tool cutting section (28) as claimed in any claim 8 - 11 wherein the first coating material is selected from a group consisting of diamond materials and diamond like materials, or from a group consisting of nitrides or carbonitrides of one or more metal elements of group 4 - 6 in the periodic table of elements, aluminum and silicon.

13. The drill tool cutting section (28) as claimed in any claim 8 - 12, wherein the second coating material is selected from a group consisting of nitrides or carbonitrides of one or more metal elements of group 4 - 6 in the periodic table of elements, aluminum and silicon.

14. The drill tool cutting section (28) for metal cutting as claimed in any claim 8 - 13, wherein, the body further comprises a land (23) with body clearance, which has the second coating layer (25) of the second coating material and lacks the first coating layer (18) of the first coating material.

15. A drill tool comprising the drill tool cutting section (28) for metal cutting as claimed in any claim 8 - 13.

16. A drill tool comprising the drill tool cutting section (28) for metal cutting as claimed in claim 15, wherein
- the drill tool further comprises a shaft section (27), which extends axially rearwards from the rear end of the drill tool cutting section (18),
- the drill tool cutting section (18) and the shaft section (27) are an integral one-piece component, and
- the shaft section (27) lacks the second coating layer (25) of the second coating material and the first coating layer (18) of the first coating material.
